# EUROPEAN PATENT SPECIFICATION

(11) **EP 1 531 107 B1**
(45) Date of publication and mention of the grant of the patent: **12.09.2007**
(21) Application number: 04256599.4
(22) Date of filing: 26.10.2004
(51) Int. Cl.: B60T 8/36, B29C 45/00

(54) **Hydraulic unit for an anti-lock brake system and method of manufacturing the same**
Hydraulikaggregrat für eine blockiergeschützte Fahrzeugbremsanlage und Verfahren zur dessen Herstellung
Unité hydraulique pour un système de freinage antiblocage et procédé de sa fabrication

(30) Priority: 14.11.2003 KR 2003080665; 14.11.2003 KR 2003080673; 14.11.2003 KR 2003080677
(43) Date of publication of application: 18.05.2005
(73) Proprietor: Mando Corporation, Pyungtaek-City, Kyungki-Do (KR)
(72) Inventor: Yang, I-Jin, Pyungteak-City, Kyonggi-Do (KR); Ha, Dong-Hun, Pyungteak-City, Kyonggi-Do (KR)
(74) Representative: Pratt, David Martin

(56) References cited:
- EP-A- 0 583 645
- EP-A- 0 758 719
- WO-A-01/32486
- WO-A-82/02020
- WO-A-95/14594
- WO-A-99/44872
- GB-A- 1 205 088
- US-A- 3 360 008
- US-A- 5 281 013

## Description

The present invention relates to a hydraulic unit for an anti-lock brake system for vehicles, and, more particularly, to a hydraulic unit for an anti-lock brake system that is manufactured through injection moulding of a resin material. Also, the present invention relates to a method of manufacturing the same.

An anti-lock brake system mounted in a vehicle is a system that controls braking oil pressure applied to wheel cylinders of wheels of the vehicle such that the braking oil pressure is decreased or increased when the vehicle is braked. The wheel of the vehicle is not fully locked by means of the anti-lock brake system, whereby the vehicle is stopped within the shortest distance possible while the steering performance of the vehicle is maintained. Such an anti-lock brake system further comprises a hydraulic unit that controls braking oil pressure, an electronic control unit that controls the hydraulic unit, and wheel sensors that sense velocities of the respective wheels of the vehicle, in addition to a servomechanism, a master cylinder, and wheel cylinders of a common brake system for vehicles.

The hydraulic unit of the anti-lock brake system decreases, maintains, or increases braking oil pressures applied to the wheels of the vehicle to control the braking force. One example of the hydraulic unit of the anti-lock brake system is disclosed in U.S. Patent Specification No. 5,577,813 wherein the hydraulic unit of the anti-lock brake system comprises a block-type housing having a plurality of flow channels formed therein, a plurality of valves mounted to the housing for opening/closing the flow channels, a pump that pressurizes a fluid, and low-pressure and high-pressure accumulators that accumulate the fluid.

To manufacture the conventional hydraulic unit as described above, a metal material, such as aluminum, is cut to obtain a hexahedral housing, and then the housing is also cut to form a plurality of bores and a plurality of inner flow channels in the housing. In the block-type housing manufactured as described above are mounted a plurality of valves, a pump, and low-pressure and high-pressure accumulators. In this way, the hydraulic unit is manufactured.

In the conventional hydraulic unit of the anti-lock brake system, however, the aluminum housing is manufactured through a step of cutting the housing such that the surface of the housing is flat, another cutting step of forming bores, in which a plurality of components are mounted in the housing, and yet another cutting step of forming inner flow channels in the housing. It is necessary that high-accuracy cutting operations be carried out at the respective cutting steps. As a result, the manufacturing process of the housing is very complicated and troublesome. Furthermore, the manufacturing costs of the housing are very high, since the housing is made of aluminum.

A known hydraulic unit is described in WO 82/02020 A.

Therefore, it is an aim of the invention to provide a hydraulic unit of an anti-lock brake system for vehicles having a housing that is easily manufactured, whereby production efficiency is improved, and thus the manufacturing costs of the housing are reduced.

It is another aim of the invention to provide a method of manufacturing the same.

The present invention provides a hydraulic unit of an anti-lock brake system, the hydraulic unit comprising a housing having components that control braking oil pressure supplied to wheels of a vehicle, such as a plurality of valves, accumulators, and hydraulic pumps, mounted thereto, flow channels formed in the housing, the flow channels being connected between the components, and a plurality of pipes connected to each other in the housing, wherein the housing is made of an injected resin material having a plurality of reinforcing members that reinforce the strength of the parts of the housing where the components are mounted to the housing and the pipes are connected to pipe-connecting parts inserted into the housing,
characterised in that the reinforcing members are connected to each other by means of connecting parts.

Preferably, the reinforcing members have uneven parts formed at the outer surfaces thereof, respectively, such that the reinforcing members are securely attached to the housing by means of the uneven parts of the reinforcing members.

Preferably, the reinforcing members are made of a metal material.

Preferably, the reinforcing members are made of a resin material having strength higher than that of the housing.

Preferably, the reinforcing members are provided at the outer surfaces thereof with uneven parts, respectively, and the reinforcing members are provided at the inner surfaces thereof with thread parts, respectively, such that the components are mounted to the housing and the pipes are connected to the housing.

Preferably, the reinforcing members are connected to each other by means of connecting parts.

Preferably, the housing further comprises: tube-shaped flow channel members inserted therein such that flow channels are formed in the housing.

The present invention also provides a method of manufacturing a hydraulic unit of an anti-lock brake system, the hydraulic unit comprising a housing having components that control braking oil pressure supplied to wheels of a vehicle, such as a plurality of valves, accumulators, and hydraulic pumps, mounted thereto, flow channels formed in the housing, the flow channels being connected between the components, and a plurality of pipes connected to each other in the housing, wherein the method comprises: a reinforcing member manufacturing step of manufacturing a plurality of reinforcing members that reinforce the parts of the housing where the components are mounted to the housing and the pipes are connected to the housing; a mould setting step of placing the reinforcing members in a mould used to form the housing; and an injection moulding step of injecting molten resin into the mould to form the housing, characterised in that the reinforcing member manufacturing step comprises simultaneously forming the plurality of reinforcing members, and connecting the reinforcing members to each other by means of connecting parts.

Preferably, the plurality of reinforcing members are simultaneously formed either by forming a metal material, or by injection moulding of a resin material.

Additional aspects and/or advantages of the invention will be set forth in part in the description which follows and, in part, will be obvious from the description, or may be learned by practice of the invention.

These and/or other aspects and advantages of the invention will become apparent and more readily appreciated from the following description of the embodiments, taken in conjunction with the accompanying drawings, of which:
FIG. 1 is a view showing a hydraulic circuit of an anti-lock brake system according to the present invention;
FIG 2 is an exploded perspective view showing the structure of a hydraulic unit of an anti-lock brake system according to a first preferred embodiment of the present invention;
FIG. 3 is a perspective view showing bores and flow channels formed in a housing of the hydraulic unit of the anti-lock brake system according to the first preferred embodiment of the present invention shown in FIG 2;
FIG. 4 is a perspective view showing the structure of reinforcing members disposed in the housing of the hydraulic unit of the anti-lock brake system according to the first preferred embodiment of the present invention shown in FIG. 2;
FIG. 5 is a sectional view showing the structure of the housing of the hydraulic unit of the anti-lock brake system according to the first preferred embodiment of the present invention shown in FIG. 2;
FIG. 6 is a sectional view of the housing of the hydraulic unit of the anti-lock brake system according to the first preferred embodiment of the present invention shown in FIG. 2 showing components mounted to the housing;
FIG. 7 is a flow chart illustrating a manufacturing process of the hydraulic unit of the anti-lock brake system according to the first preferred embodiment of the present invention;
FIG. 8 is a perspective view showing the structure of flow channel members disposed in a housing of a hydraulic unit of an anti-lock brake system according to a second embodiment ;
FIG. 9 is a sectional view showing the structure of the housing of the hydraulic unit of the anti-lock brake system according to the second embodiment shown in FIG 8; and

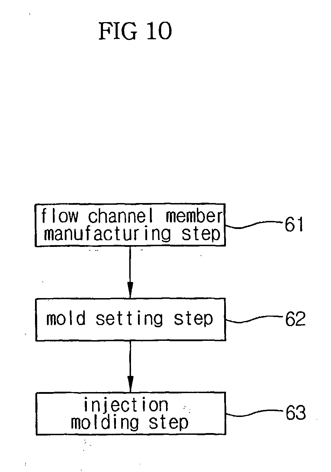

FIG. 10 is a flow chart illustrating a manufacturing process of the hydraulic unit of the anti-lock brake system according to the second embodiment.

Reference will now be made in detail to the embodiment of the present invention, examples of which are illustrated in the accompanying drawings, wherein like reference numerals refer to like elements throughout. The embodiment is described below to explain the present invention by referring to the figures.

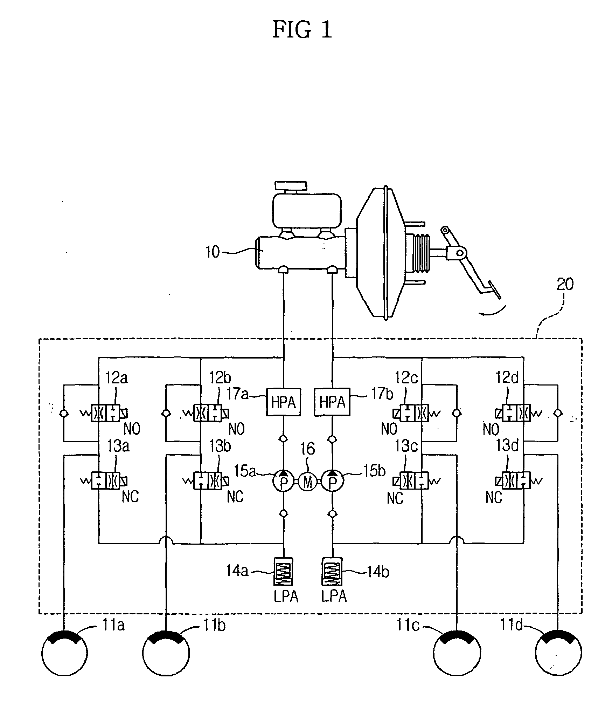

FIG. 1 is a view showing a hydraulic circuit of an anti-lock brake system according to the present invention. As is shown in FIG. 1, the anti-lock brake system comprises: a plurality of valves 12a, 12b, 12c, 12d, 13a, 13b, 13c, and 13d that intermittently control transmission of braking oil pressure created in a master cylinder 10 to wheel cylinders 11a, 11b, 11c, and 11d mounted to front and rear wheels of the vehicle, respectively; and two low-pressure accumulators 14a and 14b that accumulate oil returned from the wheel cylinders 11a, 11b, 11c, and 11d. The anti-lock brake system further comprises: two hydraulic pumps 15a and 15b that pressurize oil accumulated in the low-pressure accumulators 14a and 14b; a motor 16 that operates the hydraulic pumps 15a and 15b; and two high-pressure accumulators 17a and 17b that accumulate oil discharged from the hydraulic pumps 15a and 15b to decrease pressure pulsation.

The plurality of valves in the hydraulic circuit of FIG. 1 comprise: normal open type valves 12a, 12b, 12c, and 12d, which are disposed upstream of flow channels connected to the wheel cylinders 11a, 11b, 11c, and 11d of the wheels, respectively, the normal open type valves 12a, 12b, 12c, and 12d being normally open; and normal closed type valves 13a, 13b, 13c, and 13d, which are disposed downstream of flow channels connected to the wheel cylinders 11a, 11 b, 11c, and 11 d of the wheels, respectively, the normal open type valves 12a, 12b, 12c, and 12d being normally open. The two hydraulic pumps 15a and 15b are common piston-type pumps, which are operated by means of the motor 16. The two low-pressure accumulators 14a and 14b are disposed at the flow channels at the inlet sides of the hydraulic pumps 15a and 15b for accumulating oil returned from the normal closed type valves 13a, 13b, 13c, and 13d and supplying the accumulated oil to the inlets of the hydraulic pumps 15a and 15b. The two high-pressure accumulators 17a and 17b are disposed at the flow channels at the outlet sides of the hydraulic pumps 15a and 15b for accumulating oil discharged from the hydraulic pumps 15a and 15b to decrease pressure pulsation caused by the operation of the hydraulic pumps 15a and 15b. The operation of the motor 16, that drives the valves 12a, 12b, 12c, 12d, 13a, 13b, 13c, and 13d, and the hydraulic pumps 15a and 15b, is controlled by means of an electronic control unit (not shown) such that the braking oil pressure transmitted to the wheel cylinders of the wheels are controlled.

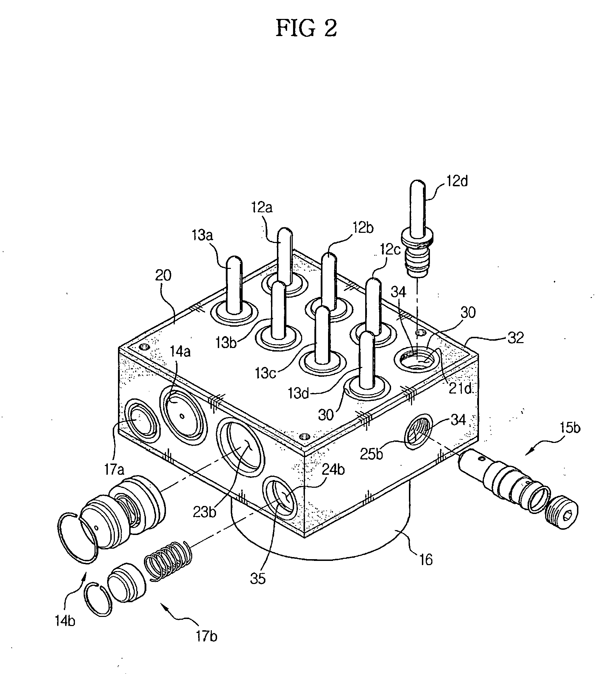

FIGS. 2 to 6 show a hydraulic unit of an anti-lock brake system according to a first preferred embodiment of the present invention. As is shown in FIG. 2, the plurality of valves 12a, 12b, 12c, 12d, 13a, 13b, 13c, and 13d, low-pressure and high-pressure accumulators 14a, 14b, 17a, and 17b, and hydraulic pumps 15a and 15b are mounted to a hexahedral housing 20 to form a hydraulic unit.

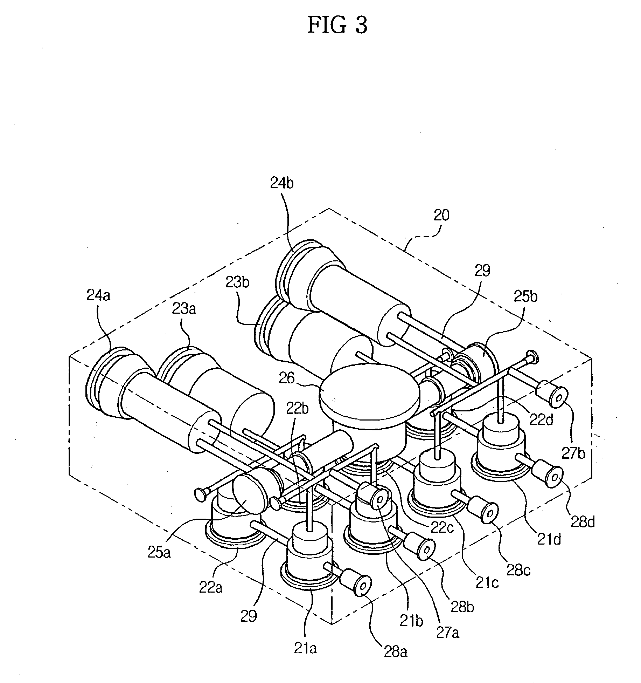

As is shown in FIG. 3, the housing 20 of the hydraulic unit is provided with bores 21a, 21b, 21c, 21d, 22a, 22b, 22c, and 22d, in which the valves 12a, 12b, 12c, 12d, 13a, 13b, 13c, and 13d are fitted, respectively, bores 23a, 23b, 24a, and 24b, in which the low-pressure and high-pressure accumulators 14a, 14b, 17a, and 17b are fitted, respectively, bores 25a, 25b, and 26, in which the hydraulic pumps 15a and 15b, and the motor 16 that drives the hydraulic pumps 15a and 15b are fitted, respectively, and a plurality of pipe-connecting parts 27a, 27b, 28a, 28b, 28c, and 28d. In the housing 20 is formed a plurality of flow channels 29 connected between the components mounted to the housing 20 and the pipe-connecting parts. In this way, the hydraulic unit as is shown in FIG. 1 is accomplished.

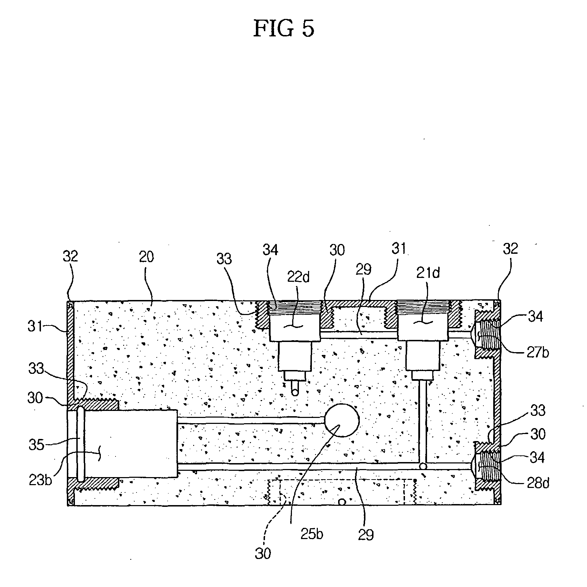

The housing 20 of the hydraulic unit according to the present invention is manufactured through injection molding of a resin material. Consequently, the housing 20 is easily manufactured. In the course of manufacturing the housing 20, reinforcing members 30 are inserted in the bores of the housing 20 where the components will be fitted and in the pipe-connecting parts for increasing the strength of the housing 20, as is shown in FIGS. 2 and 5. Preferably, the reinforcing members 30, which are formed in the shape of cylinders, are made of an injected resin material having strength higher than that of the housing 20, or a metal material.

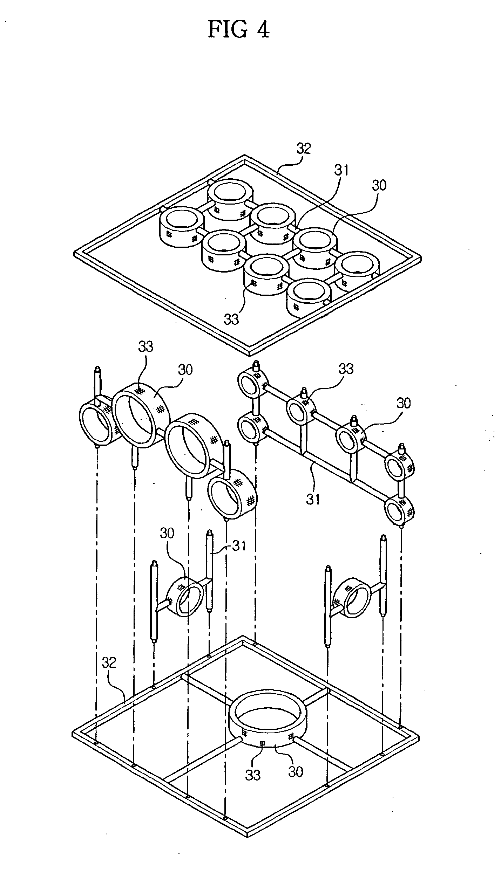

As is shown in FIG. 4, the reinforcing members 30 are manufactured while the reinforcing members 30 are connected to each other by means of connecting parts 31 and 32 such that the reinforcing members 30 can be easily disposed in the mold when the housing 20 is formed. At this time, the reinforcing members 30 are formed in groups such that the reinforcing members disposed on the same surfaces of the hosing 20 are formed all together, and the reinforcing members 30 are connected to each other by means of the connecting parts 31 and 32 when the reinforcing members 30 are disposed in the mold.

At the outer surfaces of the reinforcing members 30 are formed uneven parts 33, by which the reinforcing members 30 are securely attached to the housing 20 and airtightness is maintained between the reinforcing members 30 and the housing 20 when the housing 20 is formed while the reinforcing members 30 are inserted in the housing 20. The uneven parts 33 may be formed in the shape of grooves or protrusions disposed along the circumferences of the reinforcing members 30, spiral grooves, or lattice-shaped grooves which alternately intersect each other. At the inner surfaces of the reinforcing members 30 are formed thread parts 34 or engaging grooves 35, by which the components are mounted to the housing 20 or the pipes are connected to the housing 20 after the housing 20 is manufactured, as is shown in FIG. 5.

Now, a process of manufacturing the hydraulic unit will be described.

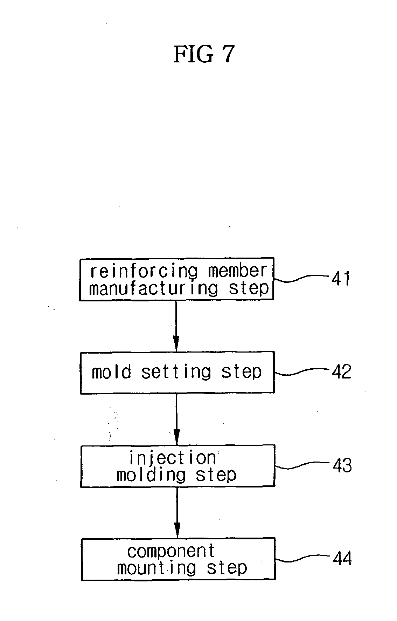

As is shown in FIG. 7, a reinforcing member manufacturing step S41 of manufacturing reinforcing members 30 that reinforce the parts of the housing 20 where the components are mounted to the housing 20 and the pipes are connected to the housing 20 is carried out to manufacture the housing 20. At this time, the reinforcing members 30 are simultaneously formed while being connected to each other by means of the connecting parts 31, as is shown in FIG. 4. The reinforcing members 30 are manufactured through injection molding of a resin material, die casting of a metal material, such as aluminum, or casting of a metal material. When the reinforcing members 30 are manufactured through injection molding of the resin material, it is necessary to use a resin material having strength higher than that of the housing 20 after the housing 20 is formed. When the reinforcing members 30 are formed, the uneven parts 33 are formed at the outer surfaces of the reinforcing members 30 such that the reinforcing members 30 are securely mounted to the housing 20 when the housing 30 is formed.

After the reinforcing member manufacturing step S41 is carried out, the reinforcing members 30 are connected to each other by means of the rectangular frame-shaped connecting parts 32, and then a mold setting step S42 of placing the reinforcing members 30 in a mold (not shown) used to form the housing 20 is carried out, as is shown in FIG. 4. The reinforcing members 30 are placed in the mold while the reinforcing members are fitted into cores (not shown) of the mold, which are provided to form a plurality of bores in the housing 20. After the placement of the reinforcing members 30 is completed, the mold is combined. At this time, the plurality of reinforcing members 30 are placed in the mold by carrying out the mounting step only once, since the reinforcing members 30 are connected to each other by means of the connecting parts 31 and 32. Consequently, the setting of the mold is easily performed.

After the mold setting step S42 is carried out, the housing 20 is formed through an injection molding step S43 of injecting molten resin into the mold. Through the injection molding step S43, the housing 20 is formed while the reinforcing members 30 previously placed in the mold are inserted in the housing 20, as is shown in FIG. 5. In the housing 20 are formed bores and flow channels 29 by means of the cores (not shown) of the mold and flow channel-forming pins (not shown). At this time, the positions of the reinforcing members 30 are not changed in the course of forming the housing 20, since the plurality of reinforcing members 30 are connected to each other.

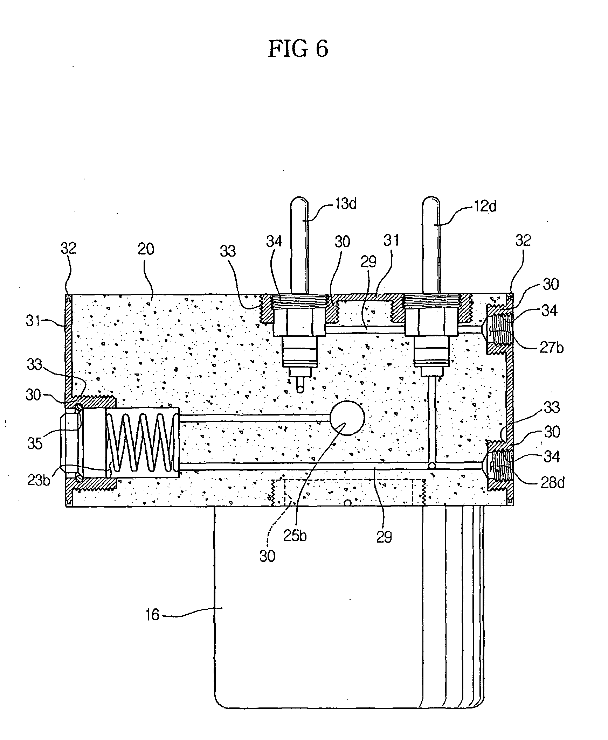

After the housing 20 is manufactured through the injection molding step S43, a component mounting step S44 of mounting the plurality of valves 12a, 12b, 12c, 12d, 13a, 13b, 13c, and 13d, and the hydraulic pumps 15a and 15b to the housing 20 is carried out, as is shown in FIG. 6. In this way, the manufacture of the hydraulic unit is completed.

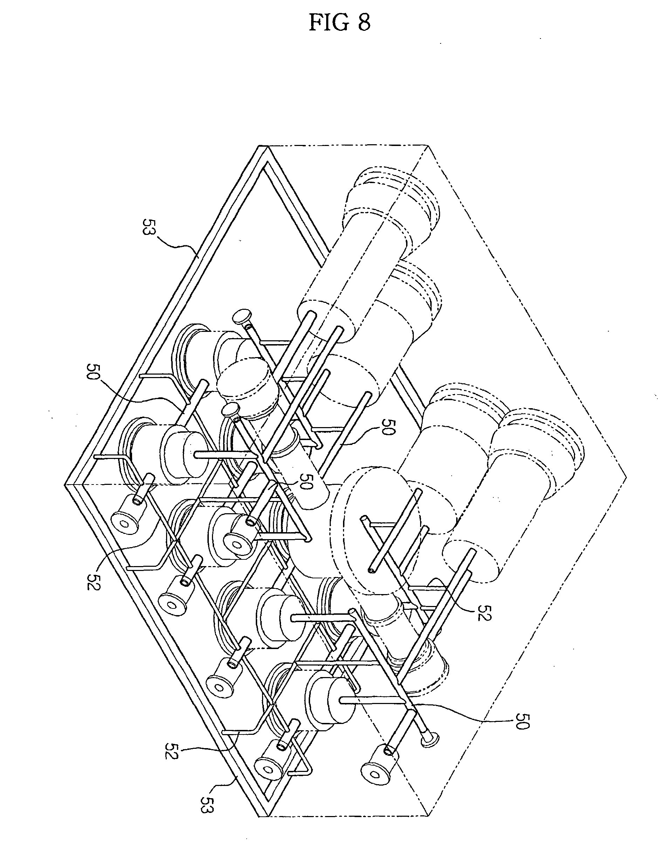

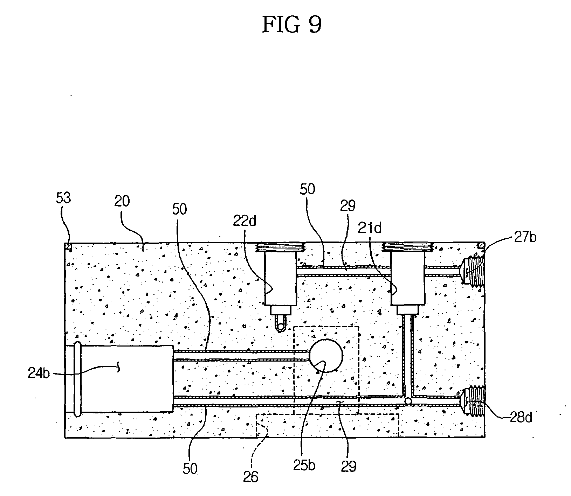

FIGS. 8 and 9 show a housing of a hydraulic unit of an anti-lock brake system according to a second embodiment. In this embodiment, tube-shaped flow channel members 50 are inserted in the flow channels formed in the housing 20 instead of the reinforcing members 30 of the first embodiment of the present invention. The flow channel members 50 are formed such that a plurality of tubes are connected to one another while being bent or intersecting one another. The flow channel members 50 are previously prepared through injection molding of a resin material or casting of a metal material before the housing 20 is formed through the injection molding.

As is shown in FIG. 8, the flow channel members 50 are manufactured while the flow channel members, which are separated from one another, are connected to one another by means of the connecting parts 52 and 53 such that the flow channel members 50 can be easily placed in the mold when the housing 20 is formed. Specifically, the flow channel members 50 are connected to one another by means of the connecting parts 52 and 53 when the flow channel members 50 are placed in the mold. Consequently, the positions of the flow channel members 50 are not changed when the housing is formed through the injection molding.

A method of manufacturing the housing 20 according to the second embodiment comprises: a flow channel member manufacturing step S61 of manufacturing the flow channel members 50; a mold setting step S62 of placing the manufactured flow channel members 50 in the mold (not shown); and an injection molding step S63 of injecting a resin material into the mold to form the housing 20.

In this way, the housing 20 is formed while the flow channel members 50 previously placed in the mold are inserted in the housing 20, as shown in FIG. 9. At the housing 20 are formed a plurality of bores by means of the cores (not shown) disposed in the mold. The plurality of bores communicate with each other through the flow channels 29 of the inserted flow channel members 50.

The reinforcing members 30 are inserted in the housing 20 according to the first preferred embodiment of the present invention, and the flow channel members 50 are inserted in the housing 20 according to the second embodiment, although according to a second preferred embodiment of the invention, the reinforcing members 30 and the flow channel members 50 may be inserted in the housing 20.

As apparent from the above description, the present invention provides a hydraulic unit of an anti-lock brake system for vehicles having a housing that is easily manufactured through injection molding of a resin material. Specifically, the housing is formed in a desired shape by carrying out the injection molding only once. Consequently, the present invention has the effect that the housing is easily manufactured with increased productivity as compared with the conventional method of manufacturing the housing through an aluminum cutting process. In addition, the manufacturing costs of the housing are reduced.

Also, the housing of the hydraulic unit of the anti-lock brake system according to the present invention is manufactured through injection molding while reinforcing members are inserted in the parts of the housing where the components are mounted to the housing and the pipes are connected to the housing. Consequently, the hydraulic unit has sufficient strength to serve as the hydraulic unit.

According to a preferred embodiment of the present invention, the outer surfaces of the reinforcing members are provided with uneven parts, by which the reinforcing members are securely mounted to the housing while airtightness and watertightness between the reinforcing members and the housing are maintained

Also, according to the present invention the reinforcing members are manufactured while being connected to each other. Consequently, the reinforcing members are easily placed in the mold in the course of forming the housing, and the positions of the reinforcing members are prevented from being changed.

Furthermore, according to the second preferred embodiment of the invention the flow channels in the housing are formed through insertion of the flow channel members in the housing when injection molding is carried out. Consequently, the housing can be more easily manufactured as compared to the conventional method of manufacturing the housing through the aluminum cutting process.

Although embodiments of the present invention have been shown and described, it would be appreciated by those skilled in the art that changes may be made in this embodiment without departing from the principles of the invention, the scope of which is defined in the claims.

## Claims

1. A hydraulic unit for an anti-lock brake system, the hydraulic unit comprising a housing (20) having components that control braking oil pressure supplied to wheels of a vehicle, such as a plurality of valves (12a, 12b, 12c, 12d, 13a, 13b, 13c, 13d), accumulators (14a, 14b, 17a, 17b), and hydraulic pumps (15a, 15b), mounted thereto, flow channels (29) formed in the housing, the flow channels being connected between the components, and a plurality of pipes connected to each other in the housing, wherein
the housing is made of an injected resin material having a plurality of reinforcing members (30) that reinforce the strength of the parts of the housing where the components are mounted to the housing and the pipes are connected to pipe-connecting parts (27a, 27b, 28a, 28b, 28c, 28d) inserted into the housing, **characterised in that** the reinforcing members are connected to each other by means of connecting parts (31, 32).

2. A unit according to claim 1, wherein the reinforcing members (30) have uneven parts (33) formed at the outer surfaces thereof, respectively, such that the reinforcing members are securely attached to the housing (20) by means of the uneven parts of the reinforcing members.

3. A unit according to claim 1 or claim 2, wherein the reinforcing members (30) are made of a metal material.

4. A unit according to claim 1 or claim 2, wherein the reinforcing members (30) are made of a resin material having strength higher than that of the housing (20).

5. A unit according to claim 1, wherein the reinforcing members are provided at the outer surfaces thereof with uneven parts (33).

6. A unit according to any one of claims 1 to 5, wherein the reinforcing members (30) are provided at the inner surfaces thereof with thread parts (34), respectively, such that the components are mounted to the housing (2a) and the pipes are connected to the housing.

7. A unit according to any one of claims 1 to 6, wherein the housing (2a) further comprises:
tube-shaped flow channel members (50) inserted therein such that flow channels are formed in the housing.

8. A method of manufacturing a hydraulic unit of an anti-lock brake system, the hydraulic unit comprising a housing (20) having components that control braking oil pressure supplied to wheels of a vehicle, such as a plurality of valves (12a, 12b, 12c, 12d, 13a, 13b, 13c, 13d), accumulators (14a, 14b, 17a, 17b), and hydraulic pumps (15a, 15b), mounted thereto, flow channels (29) formed in the housing, the flow channels being connected between the components, and a plurality of pipes connected to each other in the housing, wherein the method comprises:
a reinforcing member manufacturing step of manufacturing a plurality of reinforcing members (30) that reinforce the parts of the housing where the components are mounted to the housing and the pipes are connected to the housing;
a mould setting step of placing the reinforcing members in a mould used to form the housing; and
an injection moulding step of injecting molten resin into the mould to form the housing, **characterised in that**
the reinforcing member manufacturing step comprises:
simultaneously forming the plurality of reinforcing members; and
connecting the reinforcing members to each other by means of connecting parts (31, 32)

9. A method according to claim 8, wherein the flow channels (29) are simultaneously formed in the housing (20) through the injection moulding step when the housing is formed.

10. A method according to claim 8 or claim 9, wherein the plurality of reinforcing members (31, 32) are simultaneously formed by forming a metal material.

11. A method according to claim 8 or claim 9, wherein the plurality of reinforcing members (31, 32) are simultaneously formed by injection moulding of a resin material.

## Patentansprüche

1. Hydraulikaggregat für eine blockiergeschützte Bremsanlage, wobei das Hydraulikaggregat ein Gehäuse (20) mit Komponenten, wie eine Vielzahl von Ventilen (12a, 12b, 12c, 12d, 13a, 13b, 13c, 13d), Akkumulatoren (14a, 14b, 17a, 17b) und daran angebrachte Hydraulikpumpen (15a, 15b), im Gehäuse gebildete Durchflusskanäle (29), die den auf die Räder eines Fahrzeugs zugeführten Druck der Bremsflüssigkeit steuern, wobei die Durchflusskanäle zwischen den Komponenten verbunden sind, sowie eine Vielzahl von im Gehäuse miteinander verbundenen Rohrleitungen umfasst, wobei
das Gehäuse aus einem Spritzharzmaterial mit einer Vielzahl verstärkender Elemente (30) besteht, die die Festigkeit der Gehäuseteile verstärken, wo die Komponenten am Gehäuse angebracht sind, und die Rohrleitungen mit im Gehäuse eingeführte rohrverbindende Teile (27a, 27b, 28a, 28b, 28c, 28d) verbunden sind, **dadurch gekennzeichnet, dass** die Verstärkungselemente mittels Verbindungsteilen (31, 32) miteinander verbunden sind.

2. Aggregat nach Anspruch 1, worin die Verstärkungselemente (30) jeweils an deren äußeren Oberflächen gebildete unebene Teile (33) besitzen, so dass die Verstärkungselemente mittels der unebenen Teile der Verstärkungselemente sicher am Gehäuse (20) befestigt sind.

3. Aggregat nach Anspruch 1 oder 2, worin die Verstärkungselemente (30) aus einem Metallmaterial bestehen.

4. Aggregat nach Anspruch 1 oder Anspruch 2, worin die Verstärkungselemente (30) aus einem Harzmaterial bestehen, welches eine höhere Festigkeit als die des Gehäuses (20) aufweist.

5. Aggregat nach Anspruch 1, worin die Verstärkungselemente an deren äußeren Oberflächen mit unebenen Teile (33) versehen sind.

6. Aggregat nach einem der Ansprüche 1 bis 5, worin die Verstärkungselemente (30) jeweils an deren inneren Oberflächen mit Gewindeteilen (34) versehen sind, so dass die Komponenten am Gehäuse (2a) angebracht sind und die Rohrleitungen mit dem Gehäuse verbunden sind.

7. Aggregat nach einem der Ansprüche 1 bis 6, worin das Gehäuse (2a) weiterhin umfasst:
röhrenförmige Durchflusskanaleiemente (50), die derart darin eingeführt sind, dass Durchflusskanäle im Gehäuse gebildet werden.

8. Verfahren zur Herstellung eines Hydraulikaggregats für eine blockiergeschützte Bremsanlage, wobei das Hydraulikaggregat ein Gehäuse (20) mit Komponenten, wie eine Vielzahl von Ventilen (12a, 12b, 12c, 12d, 13a, 13b, 13c, 13d), Akkumulatoren (14a, 14b, 17a, 17b) und daran angebrachte Hydraulikpumpen (15a, 15b), im Gehäuse gebildete Durchflusskanäle (29) umfasst, die den auf die Räder eines Fahrzeugs zugeführten Druck der Bremsflüssigkeit steuern, wobei die Durchflusskanäle zwischen den Komponenten verbunden sind, sowie eine Vielzahl von im Gehäuse miteinander verbundenen Rohrleitungen, wobei das Verfahren umfasst:
einen Schritt der Verstärkungselementeherstellung zur Herstellung einer Vielzahl verstärkender Elemente (30), welche die Gehäuseteile verstärken, wobei die Komponenten am Gehäuse angebracht sind und die Rohrleitungen mit dem Gehäuse verbunden sind,
einen Schritt zur Pressformsetzung, wobei die Verstärkungselemente in eine Pressform platziert werden, die zur Formung des Gehäuses eingesetzt wird, und
einen Spritzgussschritt, wobei geschmolzenes Harz in die Pressform eingespritzt wird, um das Gehäuse zu formen, **dadurch gekennzeichnet, dass**
der Schritt zur Verstärkungselementeherstellung umfasst: gleichzeitiges Formen der Vielzahl der Verstärkungselemente und Verbinden der Verstärkungselemente mittels Verbindungsteilen (31, 32).

9. Verfahren nach Anspruch 8, worin die Durchflusskanäle (29) gleichzeitig im Gehäuse (20) durch den Spritzgusschritt geformt werden, wenn das Gehäuse geformt wird.

10. Verfahren nach Anspruch 8 oder Anspruch 9, worin die Vielzahl der Verstärkungselemente (31, 32) gleichzeitig durch das Formen eines Metallmaterials geformt werden.

11. Verfahren nach Anspruch 8 oder Anspruch 9, worin die Vielzahl der Verstärkungselemente (31,32) gleichzeitig durch das Spritzgießen eines Harzmaterials geformt wird.

## Revendications

1. Unité hydraulique pour un système de freinage antiblocage, l'unité hydraulique comprenant un boîtier (20) comprenant des composants pour commander la pression d'huile de freinage appliquée aux roues d'un véhicule, tels qu'une pluralité de valves (12a, 12b, 12c, 12d, 13a, 13b, 13c, 13d), d'accumulateurs (14a, 14b, 17a, 17b) et de pompes hydrauliques (15a, 15b), montés sur celui-ci, des canaux d'écoulement (29) formés dans le boîtier, les canaux d'écoulement étant connectés entre les composants, et une pluralité de tuyaux connectés les uns aux autres dans le boîtier, dans laquelle:
le boîtier est constitué d'une matière de résine injectée comprenant une pluralité d'éléments de renforcement (30) pour renforcer la résistance des parties du boîtier où les composants sont montés sur le boîtier et où les tuyaux sont connectés à des parties de connexion de tuyau (27a, 27b, 28a, 28b, 28c, 28d) insérées dans le boîtier, **caractérisée en ce que** les éléments de renforcement sont connectés les uns aux autres au moyen de parties de connexion (31, 32).

2. Unité selon la revendication 1, dans laquelle les éléments de renforcement (30) comprennent des parties inégales (33) formées à leurs surfaces extérieures, respectivement, de telle sorte que les éléments de renforcement soient fermement attachés au boîtier (20) au moyen des parties inégales des éléments de renforcement.

3. Unité selon la revendication 1 ou la revendication 2, dans laquelle les éléments de renforcement (30) sont constitués d'une matière métallique.

4. Unité selon la revendication 1 ou la revendication 2, dans laquelle les éléments de renforcement (30) sont constitués d'une matière de résine dont la résistance est supérieure à celle du boîtier (20).

5. Unité selon la revendication 1, dans laquelle les éléments de renforcement comprennent des parties inégales (33) à leurs surfaces extérieures.

6. Unité selon l'une quelconque des revendications 1 à 5, dans laquelle les éléments de renforcement (30) comprennent des parties filetées (34) à leurs surfaces intérieures, respectivement, de telle sorte que les composants soient montés sur le boîtier (2a) et que les tuyaux soient connectés au boîtier.

7. Unité selon l'une quelconque des revendications 1 à 6, dans laquelle le boîtier (2a) comprend en outre des éléments de canal d'écoulement en forme de tube (50) insérés dans celui-ci de telle sorte que des canaux d'écoulement soient formés dans le boîtier.

8. Procédé de fabrication d'une unité hydraulique d'un système de freinage antiblocage, l'unité hydraulique comprenant un boîtier (20) comprenant des composants pour commander la pression d'huile de freinage appliquée aux roues d'un véhicule, tels qu'une pluralité de valves (12a, 12b, 12c, 12d, 13a, 13b, 13c, 13d), d'accumulateurs (14a, 14b, 17a, 17b) et de pompes hydrauliques (15a, 15b), montés sur celui-ci, des canaux d'écoulement (29) formés dans le boîtier, les canaux d'écoulement étant connectés entre les composants, et une pluralité de tuyaux connectés les uns aux autres dans le boîtier, dans lequel le procédé comprend:
une étape de fabrication d'éléments de renforcement pour fabriquer une pluralité d'éléments de renforcement (30) qui renforcent les parties du boîtier où les composants sont montés sur le boîtier et où les tuyaux sont connectés au boîtier;
une étape d'agencement de moule pour placer les éléments de renforcement dans un moule utilisé pour former le boîtier; et
une étape de moulage par injection pour injecter une résine fondue dans le moule pour former le boîtier, **caractérisé en ce que** l'étape de fabrication d'éléments de renforcement comprend:
la formation simultanée de la pluralité d'éléments de renforcement; et
la connexion des éléments de renforcement les uns aux autres au moyen de parties de connexion (31, 32).

9. Procédé selon la revendication 8, dans lequel les canaux d'écoulement (29) sont formés simultanément dans le boîtier (20) lors de l'étape de moulage par injection pendant la formation du boîtier.

10. Procédé selon la revendication 8 ou la revendication 9, dans lequel la pluralité d'éléments de renforcement (31, 32) sont formés simultanément en formant une matière métallique.

11. Procédé selon la revendication 8 ou la revendication 9, dans lequel la pluralité d'éléments de renforcement (31, 32) sont formés simultanément en moulant par injection une matière de résine.
